# EUROPÄISCHE PATENTANMELDUNG

(11) **EP 0 995 719 A1**
(43) Veröffentlichungstag der Anmeldung: **26.04.2000**
(21) Anmeldenummer: 99117123.2
(22) Anmeldetag: 31.08.1999
(51) Int. Cl.: C01D 3/16, C01F 11/18, C01F 5/14

(54) **Verfahren zur Reinigung von Solen, wobei Magnesium und Calcium als Mg(OH2) und CaC03 gefällt und von der Sole abgetrennt werden**

(30) Priorität: 22.10.1998 DE 19848731
(71) Anmelder: Degussa-Hüls Aktiengesellschaft, 60287 Frankfurt am Main (DE)
(72) Erfinder: Böhr, Roswitha, Dr., 41363 Jüchen (DE); Rausch, Manfred, 53859 Niederkassel (DE); Schildhauer, Roland, 53859 Niederkassel (DE)

(57) **Zusammenfassung**

Beansprucht wird ein Verfahren zur Reinigung von Solen, wobei Magnesium und Calcium als Mg(OH)₂ und CaCO₃ gefällt und von den Solen, welche bei der Chlor-Alkali-Elektrolyse eingesetzt werden, abgetrennt werden. Das Verfahren wird dadurch verbessert, daß vor der Zugabe der Fällungsreagenzien ein Verhältnis von Calcium zu Magnesium von 1 : 1 bis ≥ 5 : 1 durch Zugabe von leicht löslichen Magnesium- oder Calciumsalzen oder -verbindungen zur Sole eingestellt wird.

Die erfindungsgemäße Verbesserung gegenüber den herkömmlichen Verfahren besteht darin, daß erheblich weniger Alkalilauge und/oder Alkalicarbonatlösung zur Abtrennung von Verunreinigungen aus Alkalichloridlösungen eingesetzt werden müssen.

## Beschreibung

Beansprucht wird ein Verfahren zur Reinigung von Solen, wobei Magnesium und Calcium als Mg(OH)₂ und CaCO₃ gefällt und von der Sole abgetrennt werden.

Wichtige Rohstoffe in der chemischen Industrie sind Alkalilaugen und Chlor. Eines der wichtigsten industriellen Verfahren zur Herstellung von Alkalilauge und Chlor ist die Chlor-Alkali-Elektrolyse. Man unterscheidet drei unterschiedliche Verfahren. Das Amalgam-Verfahren, das Diaphragma-Verfahren und das Membran-Verfahren. Alle genannten Verfahren spalten mittels elektrischer Energie Alkalichlorid zu Alkalilauge bzw. Alkaliamalgam und Chlor auf. Das Alkalichlorid wird aus Salzlagerstätten entnommen, mit Wasser aufgelöst und als Sole in den obengenannten Verfahren eingesetzt. Die Salzlagerstätten, aus denen die Alkalichloride stammen, liefern Alkalichlorid unterschiedlicher Qualität. So ist das Alkalichlorid häufig z.B. mit Silikaten, Sulfaten, Carbonaten sowie mit Magnesium, Calcium, Eisen verunreinigt.

Bei den kationischen Verunreinigungen stören insbesondere Calcium-, Magnesium-, Eisen- und die meisten Schwermetallionen die oben genannten Elektrolyseverfahren. Diese Verunreinigungen werden im allgemeinen als Elektrolysegifte bezeichnet.

Bei den Elektrolyseverfahren, die eine Membran einsetzen, bewirken die Verunreinigungen eine Zerstörung oder Einschränkung der Funktion der Membran. Beim Amalgamverfahren hat das Vorhandensein der oben genannten Verunreinigungen insbesondere zwei negative bzw. gefährliche Auswirkungen auf den Elektrolyseprozeß. Eisen- bzw. Schwermetallionen als Verunreinigungen in der Sole bewirken an der Quecksilberkathode eine vermehrte Wasserstoffabscheidung. Bei zu hoher Wasserstoffabscheidung entsteht ein hochexplosives Chlor-Knallgas-Gemisch. Die vermehrte Wasserstoffabscheidung wird durch das Vorhandensein von Calcium oder Magnesium neben Eisen oder Schwermetallen noch beschleunigt (Jan Balej, Ivo Paseka und Hermann Matschiner; Chem. Techn. 30, 1978).

Sind als Verunreinigungen in der Sole keine Schwermetalle und kein Eisen vorhanden, so ist die Wasserstoffabscheidung nicht das Hauptproblem sondern die Bildung von schwer flüssigem Amalgam, der sogenannten Amalgambutter. Diese kann Stockungen und Verstopfungen im Amalgamkreislauf verursachen, oder bei der Amalgamzersetzung stören (Jean Billiter; Die technische Elektrolyse der Nichtmetalle, Springer-Verlag, Wien 1954).

US 2 248 137 lehrt, daß unter den üblichen Arbeitsbedingungen Konzentrationen von bis zu 0,1 mg/l Fe, bis zu 6 mg/l Mg und 1,5 bis 3,6 g/l Ca in einer Alkalichlorid-Sole als harmlos hinsichtlich des Auftretens von Wasserstoff bei der Elektrolyse angesehen werden können.

Zur Senkung der Konzentration an Verunreinigungen in der Sole wird diese üblicherweise in einem ein- oder mehrstufigen Verfahren mit Bariumchlorid, Alkalicarbonat oder Alkalilauge versetzt, um die störenden Verunreinigungen als schwerlösliche Hydroxide, Sulfate oder Carbonate zu fällen und durch Absetzen oder Filtration des Niederschlags aus der Sole zu entfernen (Jean Billiter; Die technische Elektrolyse der Nichtmetalle, Springer-Verlag, Wien 1954).

In neueren Quellen über die Verfahrensweise bei der Chlor-Alkali-Elektrolyse werden kleinere Konzentrationen an Magnesium und Calcium genannt. So werden Konzentrationen kleiner 2 mg/l für Calcium und kleiner 1 mg/l für Magnesium in der Sole als unschädlich angesehen. Soll die Sole im Membranverfahren eingesetzt werden, so sollten die Konzentrationen kleiner 0,05 ppm an Calcium und Magnesium betragen. In diesem Fall durchläuft die vorgereinigte Sole einen Ionenaustauscher um die niedrigen Magnesium- und Calciumkonzentrationen erreichen zu können (Ullmann's encyclopedia of industrial chemistry, 5th edition 1986, volume 6, 406)

DE 12 09 562 lehrt ein Verfahren zur Aufbereitung von Sole, bei welchem der Sole gebrannter oder gelöschter Kalk zugegeben wird, wobei der pH-Wert mit Hilfe des Kalks auf einen pH-Wert von mindestens 10 eingestellt wird. Durch Zugabe von Kalk und eventuelle weitere Erhöhung des pH-Wertes wird das Magnesium als Mg(OH)₂ gefällt. In einer weiteren Stufe wird der Sole Natriumcarbonat zugesetzt und das Calcium als Calciumcarbonat gefällt. Dieses Verfahren wird in einem besonderen Behälter durchgeführt.

In US 4 277 447 wird ein Verfahren beschrieben, bei welchem CO₂ mit einer Lösung, die Natronlauge und Natriumchlorid enthält, welche aus den Zellen der Elektrolyse stammt, zur Reaktion gebracht wird, so daß Natriumbicarbonat und Natriumcarbonat entstehen. Diese Lösung wird zur Sole hinzugegeben, um das in der Sole enthaltene Calcium als Calciumcarbonat zu fällen und dadurch aus der Sole durch Filtration entfernen zu können.

Aus DE 195 46 135 ist ein Verfahren zur Aufbereitung von kieselsäurehaltigen Alkalisalzlösungen für den Einsatz bei einer Chlor-Alkali-Elektrolyse bekannt bei welchem Verunreinigungen durch Fällung aus der Alkalisalzlösung entfernt werden. Als Fällungsmittel werden NaOH, Na₂CO₃, BaCl₂, BaCO₃ und/oder FeCl₃, CaCl₂ oder Ca(OH)₂ eingesetzt.

Durch den Einsatz großer Mengen Fällungsreagenzien und Laugen bzw. Säuren und/oder besonderer Behälter oder Apparaturen verursachen diese Verfahren hohe Kosten und sind relativ aufwendig.

Der vorliegenden Erfindung liegt daher die Aufgabe zugrunde, ein einfaches und wirtschaftlicheres Verfahren zur Reinigung von Solen zu finden.

Überraschenderweise wurde gefunden, daß durch Einstellen des Calcium-Magnesium Verhältnisses in einer Sole die Reinigung der Sole wesentlich effektiver und wirtschaftlicher durchzuführen ist.

Gegenstand der vorliegenden Erfindung ist deshalb ein Verfahren zur Reinigung von Solen, wobei Magnesium als Magnesiumhydroxid und Calcium als Calciumcarbonat gefällt und von der Sole abgetrennt werden, dadurch gekennzeichnet, daß vor der Fällung von Magnesium und Calcium in der Sole ein Verhältnis von Calcium zu Magnesium von 1 : 1 bis 7 : 1 eingestellt wird.

Unter Solen werden im Sinne der vorliegenden Erfindung wäßrige Salzlösungen, insbesondere wäßrige Alkalichloridlösungen verstanden.

Durch Einsatz des erfindungsgemäßen Verfahrens kann bei der Abtrennung von Verunreinigungen aus Solen die Menge an eingesetztem Fällungsreagenz in erheblichem Maße verringert werden. Durch Anwendung einer besonderen Ausführungsart des erfindungsgemäßen Verfahrens können im Gesamtprozeß der Elektrolyse außerdem erhebliche Mengen an Säure eingespart werden, da der Fällungsprozeß bei einem niedrigeren pH-Wert durchgeführt wird und zum Ansäuern der Sole vor der Elektrolyse weniger Säure eingesetzt werden muß.

Das erfindungsgemäße Verfahren wird im folgenden anhand der Aufbereitung einer Sole für den Einsatz zur Chlor-Alkali-Elektrolyse, insbesondere zur Chlor-Alkali-Elektrolyse nach dem Amalgamverfahren beschrieben, ohne daß das erfindungsgemäße Verfahren auf dieses beschränkt ist.

Bei der Herstellung von Chlor und Alkalihydroxid nach dem bekannten Amalgamverfahren wird die zu elektrolysierende gesättigte Alkalichlorid-Sole vorzugsweise aus festem Salz hergestellt. Dies kann dadurch geschehen, daß die schon elektrolysierte Sole, die durch die Elektrolyse an Alkalichlorid abgereichert ist, von unten nach oben einen Behälter durchströmt, welcher festes Salz enthält, welches aus natürlich vorkommenden Steinsalzlagerstätten oder z.B. Meersalzgewinnungsanlagen stammen kann. Die so aufkonzentrierte Sole enthält je nach Herkunft des eingesetzten festen Alkalichlorids unterschiedliche Mengen an Verunreinigungen. Dem Fachmann erschließen sich weitere Möglichkeiten zur Herstellung von Solen aus festem Alkalichlorid oder Alkalichloridlösungen.

Als Verunreinigungen können Eisen, Silicium, Calcium und Magnesium aber auch alle weiteren metallischen und nichtmetallischen wasserlöslichen Ionen sowie wasserunlösliche ionische oder nichtionische Verbindungen in der Sole vorhanden sein.

Da diese Verunreinigungen bei der Elektrolyse zu verschiedenen Problemen, wie z.B. beim Amalgamverfahren verstärkte Wasserstoffentwicklung an der Quecksilberkathode, führen, müssen sie vor der Zuführung der Sole zur Elektrolyse aus der Sole weitestgehend entfernt werden. Besonders der Anteil an Calciumionen in der Sole wird auf eine Konzentration kleiner 2 mg/l vorzugsweise kleiner 1 mg/l eingestellt. Der Anteil an Magnesiumionen in der Sole wird auf eine Konzentration kleiner 0,2 mg/l, vorzugsweise kleiner 0,1 mg/l eingestellt.

Dies geschieht erfindungsgemäß dadurch, daß zumindest eine Calcium- oder Magnesiumverbindung oder zumindest ein Calcium- oder Magnesiumsalz, vorzugsweise eine leicht lösliche Calciumverbindung oder ein leicht lösliches Calciumsalz und besonders bevorzugt Calciumoxid oder Calciumhydroxid, vor der Zugabe der Fällungsreagenzien der Sole zugegeben wird. Es wird vorzugsweise soviel Calcium-oder Magnesiumsalz oder -verbindung der Sole zugefügt, daß das Verhältnis von Calcium zu Magnesium in der Sole von 1 : 1 bis 15 : 1, besonders bevorzugt von 1 : 1 bis 7 : 1, eingestellt wird.

Die Zugabe der Calcium- oder Magnesiumverbindung oder des -salzes zur Sole kann als pulverförmiger oder granulierter Feststoff oder aufgelöst in einer Flüssigkeit wie z.B. Wasser, vorzugsweise als Feststoff, erfolgen. Die Verbindung oder das Salz wird vorzugsweise in einen von der Sole durchströmten und mit einem Mischer oder einem anderen zur Durchmischung geeigneten Gerät ausgerüsteten Behälter oder in eine Rohrleitung gegeben. Die Zugabe kann kontinuierlich oder diskontinuierlich, vorzugsweise kontinuierlich erfolgen.

Als Fällungsreagenzien werden der gesättigten Alkalichlorid-Sole Alkalilauge und Alkalicarbonatlösung, wobei vorzugsweise das Alkaliion eingesetzt wird, welches in der Sole schon vorhanden ist, zugesetzt.

In einer besonders bevorzugten Ausführungsart des erfindungsgemäßen Verfahrens wird der Sole vorzugsweise soviel Calcium- oder Magnesiumsalz oder -verbindung zugesetzt, daß das Verhältnis von Calcium zu Magnesium in der Sole vor der Zugabe der Fällungsreagenzien 4 : 1, vorzugsweise 5 : 1 und besonders bevorzugt von 5 : 1 bis 7:1 beträgt. Durch die Zugabe von Calcium- oder Magnesiumionen, vorzugsweise in Form von leicht löslichen Calcium- oder Magnesiumverbindungen oder -salzen, zur Sole wird bei der Fällung das Löslichkeitsprodukt von Calciumcarbonat verschoben.

Zum Erreichen der Grenzwerte von 2 mg/l, vorzugsweise 1 mg/l für Calcium und von 0,2 mg/l, vorzugsweise 0,1 mg/l für Magnesium in der Sole kann bei Einstellung des oben genannten Verhältnisses von Calcium zu Magnesium die Zugabe von Alkalilauge reduziert werden. Vorzugsweise wird soviel Alkalilauge zugegeben, daß die Sole einen pH-Wert von unter 10,6, vorzugsweise einen pH-Wert von 10,2 bis 10,6, besonders bevorzugt einen pH-Wert von 10,2 bis 10,3 aufweist.

Als Fällungsreagenz wird anschließend Alkalicarbonatlauge hinzugegeben. Bei dem eingestellten pH-Wert fällt soviel Magnesium als Mg(OH)₂ und soviel Calcium als CaCO₃ aus der Sole aus, daß die oben genannten Grenzwerte für gelöstes Magnesium und Calcium in der Sole unterschritten werden.

In einer zweiten besonderen Ausführungsart des erfindungsgemäßen Verfahrens wird der zu behandelnden Sole soviel Calcium- oder Magnesiumverbindung oder -salz zugegeben, daß das Verhältnis von Calcium zu Magnesium von 1,5 : 1 bis 7 : 1, besonders bevorzugt von 3,0 : 1 bis 5 : 1 beträgt.

Durch Zugabe einer entsprechenden Menge Alkalilauge wird ein pH-Wert der Sole von 10,6 bis 10,8 in der Sole eingestellt. Durch Zugabe von Alkalicarbonatlauge wird das Magnesium als Mg(OH)₂ und das Calcium als CaCO₃ aus der Sole ausgefällt.

Bei dieser besonderen Ausführungsart des erfindungsgemäßen Verfahrens kann durch Zugabe von Calcium- oder Magnesiumverbindung oder -salz die notwendige Menge der als Fällungsreagenz zuzugebenden Alkalicarbonatlauge erheblich verringert werden. Trotz Verringerung der Zugabe an Alkalicarbonatlauge werden sowohl die oben angegebenen Grenzwerte für gelöstes Calcium als auch die Grenzwerte für gelöstes Magnesium in der Sole erreicht.

In einer dritten Ausführungsart des erfindungsgemäßen Verfahrens wird das Verhältnis von Calcium zu Magnesium in der zu behandelnden Sole durch Zugabe von Calcium- oder Magnesiumverbindung oder -salz so eingestellt, daß das Verhältnis von Calcium zu Magnesium bei 3 : 1 bis 7 : 1 liegt. Der pH-Wert wird durch Zugabe von Alkalilauge von 10,2 bis 10,6 eingestellt. Durch Zugabe von Alkalicarbonatlauge als Fällungsreagenz wird das Magnesium als Mg(OH)₂ und das Calcium als CaCO₃ gefällt. Durch einfache Laborversuche kann das Calcium-Magnesium-Verhältnis auf den pH-Wert abgestimmt werden, so daß die Grenzwerte von gelöstem Magnesium und Calcium in der behandelten Sole erreicht bzw. unterschritten werden.

Bei dieser besonderen Ausführungsart des erfindungsgemäßen Verfahrens kann sowohl die benötigte Menge an zuzugebener Alkalilauge als auch die Menge an zuzugebener Alkalicarbonatlauge verringert werden.

Bei der ersten und dritten Ausführungsart, bei denen der pH-Wert unter 10,6 eingestellt wird, wird ein zusätzlicher Einsparungseffekt erzielt. Da der pH-Wert, der für die Fällungsreaktion mit Hilfe von Alkalilauge eingestellt wird, niedriger sein kann als bei Verfahren, die ohne Einstellung des Calcium-Magnesium-Verhältnisses durchgeführt werden, wird beim Ansäuern der Sole vor der Zuführung der Sole zur Elektrolyse (im allgemeinen wird ein pH-Wert von 2 bis 6 eingestellt) weniger Säure benötigt.

Bei allen Ausführungsarten des erfindungsgemäßen Verfahrens kann es vorteilhaft sein, der Sole zumindest ein Agglomerisationshilfsmittel, wie z.B. Polyacrylamide oder andere makromolekulare, organische Stoffe, zuzusetzen, um eine bessere Fällung zu erreichen.

Die ausgefällten Verunreinigungen können auf bekannte Weise z.B. durch Absetzen in Absetzbecken, Filtrieren, Zentrifugieren oder ähnliche Methoden, die geeignet sind Feststoffe von Flüssigkeiten zu trennen aus der Sole entfernt werden.

Die gefällten Salze enthalten oft weitere Verunreinigungen, die bei der Fällungsreaktion mitgefällt werden können, wie z.B. Eisen oder Silikate. Sind in der Sole Verunreinigungen vorhanden, die nicht mitgefällt werden, so kann es vorteilhaft sein, der Sole weitere Salze zuzugeben. Diese Salze können mit den störenden Verunreinigungen der Sole zu schwerlöslichen Verbindungen reagieren. Beispielsweise können Bariumsalze wie BaCl₂, oder BaCO₃ zur Sole hinzugegeben werden, die das Ausfällen von Sulfaten als Bariumsulfat ermöglichen. Dem Fachmann sind weitere Salze bekannt, die die Fällung möglicher Verunreinigungen ermöglichen. Die Zugabe der Salze kann in jedem Schrift des Reinigungsverfahrens der Sole zugegeben werden, wobei es vorteilhaft sein kann, die Salze in dem Schritt des Verfahrens einzusetzen, in dem der pH-Wert der Sole die Fällung unterstützt.

Es kann vorteihaft sein, das erfindungsgemäße Verfahren in ein, zwei oder mehr Verfahrensschritten durchzuführen. Bei der zwei oder mehrstufigen Ausführung des erfindungsgemäßen Verfahrens können, durch Fällung von Calcium und Magnesium in verschiedenen Behältern oder Behälterzonen, das Mg(OH)₂ und CaCO₃ als relativ reine Komponenten getrennt erhalten werden und somit einer weiteren Verwendung zugeführt werden.

Das erfindungsgemäße Verfahren kann auf alle Alkalichlorid enthaltende Solen, die in der Chlor-Alkali-Elektrolyse eingesetzt werden sollen, angewendet werden. Vorzugsweise wird das erfindungsgemäße Verfahren bei Natriumchlorid- oder Kaliumchloridsolen, besonders bevorzugt bei Kaliumchloridsolen, angewendet.

Soll die erfindungsgemäß behandelte Sole für eine Chlor-Alkali-Elektrolyse nach dem Membran- oder Diaphragmaverfahren eingesetzt werden, kann es vorteilhaft sein, die Sole nach der Fällung in zumindest einem Ionenaustauscher zu behandeln. Durch den nachgeschalteten Einsatz von Ionenaustauschern kann die Konzentration an Calciumionen, Magnesiumionen und anderen Kationen oder Anionen bis in den ppm-Bereich gesenkt werden.

Das erfindungsgemäße Verfahren wird anhand der folgenden Beispiele beschrieben, ohne darauf beschränkt zu sein.

### Beispiel 1: Zugabe von Calciumoxid und verringerte Kalilaugezugabe

Zu einer Kaliumchloridsole 1 000 ml mit einem pH-Wert von 2,5, die 3,4 mg/l Calcium und 5,0 mg/l Magnesium als Verunreinigungen enthält, wird 30,2 mg Calciumoxid pulverförmig hinzugegeben und durch Rühren aufgelöst, so daß das Verhältnis von Calcium zu Magnesium in der Sole 5 : 1 beträgt. Zur Fällung der Verunreinigungen als Mg(OH)₂ und CaCO₃ wird zuerst 2 g KOH-Lauge (44 %ig) zur Sole hinzugefügt, so daß sich ein pH-Wert von 10,3 einstellt. Anschließend werden zur Sole 10 g K₂CO₃-Lauge (46 %ig) hinzugefügt. Nach der Fällung enthielt die Lösung weniger als 0,1 mg/l Magnesium und weniger als 1 mg/l Calcium.

Durch die Zugabe von 30,2 mg Calciumoxid konnte die benötigte Menge an Kalilauge gegenüber der Fahrweise ohne Calciumoxidzugabe etwa auf die Hälfte verringert werden. Die Salzsäuremenge, die bei einer anschließenden Elektrolyse eingesetzt werden müßte, um die Sole auf einen pH-Wert von 2 bis 6 zu bringen, ist geringer, da der pH-Wert der Sole mit 10,3 geringer ist als der bei den herkömmlichen Verfahren verwendete pH-Wert.

### Beispiel 2: Zugabe von Calciumoxid und verringerte Kaliumcarbonatzugabe

Zu einer mit Calcium und Magnesium verunreinigten Sole 300 m³/h, wird 4,7 kg/h Calcium in Form von Calciumoxid hinzugefügt. Durch Zugabe von soviel Kalilauge, daß die Sole einen pH-Wert von 10,8 aufweist und Zugabe von Kaliumcarbonatlauge werden die Verunreinigungen aus der Sole ausgefällt.

Die Zugabe von Calciumoxid zur Sole vor der Fällung bewirkt, daß die Grenzwerte für Magnesium (0,1 mg/l) und Calcium (1 mg/l) in der behandelten Sole erreicht werden obwohl nur 50 % der Menge an Kaliumcarbonatlauge zugegeben wurde, die ohne die Zugabe von Calciumoxid zum Erreichen der Grenzwerte notwendig gewesen wäre.

## Patentansprüche

1. Verfahren zur Reinigung von Solen, wobei Magnesium als Magnesiumhydroxid und Calcium als Calciumcarbonat gefällt und von der Sole abgetrennt werden,
dadurch gekennzeichnet,
daß vor der Fällung von Magnesium und Calcium in der Sole ein Verhältnis von Calcium zu Magnesium von 1 : 1 bis 7 : 1 eingestellt wird.

2. Verfahren nach Anspruch 1,
dadurch gekennzeichnet,
daß das Calcium-Magnesiumverhältnis in der Sole durch Zugabe zumindest eines Calciumsalzes oder zumindest einer Calciumverbindung zur Sole eingestellt wird.

3. Verfahren nach Anspruch 1,
dadurch gekennzeichnet,
daß das Calcium-Magnesiumverhältnis in der Sole durch Zugabe zumindest eines Magnesiumsalzes oder zumindest einer Magnesiumverbindung zur Sole eingestellt wird.

4. Verfahren nach zumindest einem der Ansprüche 1 oder 2,
dadurch gekennzeichnet,
daß als zuzugebende Calciumverbindung CaO verwendet wird

5. Verfahren nach zumindest einem der Ansprüche 1 oder 2,
dadurch gekennzeichnet,
daß als zuzugebendes Calciumsalz Ca(OH)₂ verwendet wird.

6. Verfahren nach zumindest einem der Ansprüche 1 bis 5,
dadurch gekennzeichnet,
daß das zuzugebende Salz oder die zuzugebende Verbindung als Feststoff zur Sole hinzugefügt wird.

7. Verfahren nach zumindest einem der Ansprüche 1 bis 6,
dadurch gekennzeichnet,
daß das zuzugebende Salz oder die Verbindung in einer Flüssigkeit gelöst zur Sole hinzugefügt wird.

8. Verfahren nach zumindest einem der Ansprüche 1 bis 7,
dadurch gekennzeichnet,
daß nach Einstellen des Verhältnisses von Calcium zu Magnesium der pH-Wert der Sole durch Zugabe von Alkalihydroxid auf einen pH-Wert von 10,2 bis 11 eingestellt wird.

9. Verfahren nach Anspruch 8,
dadurch gekennzeichnet,
daß der pH-Wert der Sole auf einen pH-Wert von 10,2 bis 10,8 eingestellt wird.

10. Verfahren nach Anspruch 8,
dadurch gekennzeichnet,
daß der pH-Wert der Sole auf einen pH-Wert von 10,2 bis 10,3 eingestellt wird.

11. Verfahren nach Anspruch 10,
dadurch gekennzeichnet,
daß in der Sole vor der Fällung das Verhältnis von Calcium zu Magnesium von 3 : 1 bis 5 : 1 eingestellt wird.

12. Verfahren nach zumindest einem der Ansprüche 1 bis 11,
dadurch gekennzeichnet,
daß der Sole Alkalicarbonat zugesetzt wird.

13. Verfahren nach zumindest einem der Ansprüche 1 bis 12,
dadurch gekennzeichnet,
daß der Sole zumindest ein weiteres Salz oder eine weitere Verbindung zugesetzt wird.

14. Verfahren nach zumindest einem der Ansprüche 1 bis 13,
dadurch gekennzeichnet,
daß der zu reinigenden Sole zumindest ein Agglomerisationshilfsmittel zugesetzt wird.

15. Verfahren nach zumindest einem der Ansprüche 1 bis 14,
dadurch gekennzeichnet,
daß die Sole nach der Fällung in zumindest einem Ionenaustauscher behandelt wird.

16. Verfahren nach zumindest einem der Ansprüche 1 bis 15,
dadurch gekennzeichnet,
daß die zu reinigende Sole Alkalichlorid enthält.

17. Verfahren nach zumindest einem der Ansprüche 1 bis 16,
dadurch gekennzeichnet,
daß die zu reinigende Sole Kalichlorid enthält.

18. Verfahren nach zumindest einem der Ansprüche 1 bis 17,
dadurch gekennzeichnet,
daß die gereinigte Sole einer Chlor-Alkali-Elektrolyse zugeführt wird.

19. Verfahren nach zumindest einem der Ansprüche 1 bis 18,
dadurch gekennzeichnet,
daß die gereinigte Sole einer Chlor-Alkali-Elektrolyse nach dem Amalgamverfahren zugeführt wird.
